# EUROPÄISCHE PATENTSCHRIFT

(11) **EP 3 497 732 B1**
(45) Veröffentlichungstag und Bekanntmachung des Hinweises auf die Patenterteilung: **13.01.2021**
(21) Anmeldenummer: 17749453.1
(22) Anmeldetag: 08.08.2017
(51) Int. Cl.: H01M 2/10

(54) **BATTERIEGEHÄUSE**
BATTERY HOUSING
BOÎTIER DE BATTERIE

(30) Priorität: 11.08.2016 DE 102016214974
(43) Veröffentlichungstag der Anmeldung: 19.06.2019
(73) Patentinhaber: ThyssenKrupp Steel Europe AG, 47166 Duisburg (DE); thyssenkrupp AG, 45143 Essen (DE)
(72) Erfinder: NIERHOFF, Daniel, 45468 Mülheim (DE); QUANDT, Joachim, 40489 Düsseldorf (DE); LATUSKE, Clemens, 40476 Düsseldorf (DE); HILFRICH, Erik, 40470 Düsseldorf (DE)
(74) Vertreter: ThyssenKrupp Steel Europe AG
(86) Internationale Anmeldenummer: PCT/EP2017/070008
(87) Internationale Veröffentlichungsnummer: WO 2018/029167

(56) Entgegenhaltungen:
- DE-A1-102009 058 808
- DE-A1-102014 115 561
- DE-A1-102014 203 505
- JP-A- 2012 111 465
- US-A1- 2009 236 162
- US-A1- 2012 321 927
- US-A1- 2013 192 914
- US-A1- 2014 017 538

## Beschreibung

Die Erfindung betrifft ein Batteriegehäuse zur Aufnahme von Batterieelementen, insbesondere für ein Fahrzeug, umfassend einen Kasten, welcher aus einem oder aus mehreren Profilen zusammengesetzter Rahmen und zumindest einem ersten Boden gebildet ist, welcher einen Innenbereich für die Batterieelemente bereitstellt, einen zweiten Boden, welcher beabstandet unterhalb des ersten Bodens angeordnet ist und einen Raum zwischen sich und dem ersten Boden definiert, einen Deckel zum Abdecken des Kastens.

Die zunehmende Elektrifizierung von Kraftfahrzeugen, insbesondere von Automobilen, und der gleichzeitige Kundenwunsch an eine hohe Reichweite solcher Fahrzeuge erfordern die Entwicklung leistungsfähiger Batteriekonzepte.

Für die Integration von Batterien in die Kraftfahrzeuge spielen nicht nur die primären, elektrischen Anforderungen eine entscheidende Rolle, sondern zudem auch die sekundären, mechanischen Anforderungen. Letztere müssen erfüllt werden, um auch im Crashfall eine hohe Betriebssicherheit gewährleisten zu können. Dabei kommt dem Batteriegehäuse eine besondere Bedeutung zu.

Das Batteriegehäuse muss nämlich nicht unerhebliche mechanische Lasten aushalten können, welche sowohl seitlich, frontal, rückwärtig oder auch von unten einwirken können. Die auftretenden Lasten können dabei durch quasistatische Ersatzlastfälle repräsentiert werden, deren Behandlung jedoch sehr anspruchsvoll sein kann, da möglichst keine Beschädigung der Batterie oder einzelner Batterieelemente auftreten soll.

Bezogen auf den Boden des Batteriegehäuses spielen weitere Aspekte eine wichtige Rolle, wie eine zuverlässige Dichtigkeit, die Möglichkeit zur Unterbringung einer Kühlung, Korrosionsschutz, die Fähigkeit zur Abschirmung innerer und äußerer elektromagnetischer Felder und Reparaturfähigkeit. Essentiell ist die Minimierung des Bauraumbedarfs des Batteriegehäuses, um im begrenzten Platz der Fahrzeugkarosserie möglichst viele Batterieelemente unterbringen zu können bzw. eine ausreichende Bodenfreiheit zu erhalten.

Insbesondere die Faktoren geringer Bauraumbedarf und der geforderten Crashperformance stellen einen Zielkonflikt dar. Dies ist darin zu begründen, dass die Strukturen bei geringem Bauraum ein geringes Widerstandsmoment aufweisen. Ferner ist für den seitlichen Crash eine andere Struktur notwendig als für den frontalen/ rückwärtigen Crash, so dass die Crashstrukturen untereinander um den Bauraum konkurrieren.

Batteriegehäuse für Fahrzeugbatterien sind allgemein bekannt. Der Boden des Batteriegehäuses besteht meist aus 2 Blechen, aus einem ersten Boden, dem (Batteriegehäuse-)Bodenblech und aus einem zweiten Boden, dem Unterfahrschutz. Das Bodenblech dichtet das Batteriegehäuse im Bereich der angeordneten Batterieelemente ab. Zusätzlich verstärkt es die Batteriegehäuse-Struktur für alle Crashlastfälle, insbesondere für seitliche Crashlasten. Unterhalb des Bodenbleches kommt oft eine Kühlung zum Einsatz, weshalb es gut Wärme leiten sollte. Der Unterfahrschutz schützt vor Crashlasten von unten und nur teilweise vor anderen Crashlasten. Er sollte im Falle von Beschädigungen austauschbar sein. Ferner sollte er korrosionsbeständig sein.

Batteriegehäuse sind beispielsweise aus den Druckschriften US 2013/0192914 A1 und JP 2012-111465 A bekannt.

Die deutsche Offenlegungsschrift DE 10 2009 037 138 A1 offenbart einen Batteriekasten für eine Batterie in einem Kraftfahrzeug, welcher aus einer Oberschale und einer Unterschale, sowie einer Schale aus einem metallischen Material, welche die Unterschale zumindest abschnittsweise umgibt, besteht. Die Unterschale kann im Bodenbereich eine Rippenstruktur aufweisen. Die Crashperformance bei Lasten quer zu den Rippen ist allerdings verbesserungsbedürftig.

Die Aufgabe der Erfindung ist es, ein verbessertes Batteriegehäuse anzugeben, welche insbesondere den mechanischen Anforderungen im Crashfall gerecht werden kann. Gelöst wird die Aufgabe dadurch, dass im Raum ein oder mehrere Längsverstärkungselemente und/oder ein oder mehrere Querverstärkungselemente angeordnet sind. Das Vorsehen eines Kastens, welcher aus einem oder aus mehreren Profilen zusammengesetzter Rahmen und zumindest einem ersten Boden gebildet ist, welcher einen Innenbereich für die Batterieelemente bereitstellt, und einem Deckel zum Abdecken des Kastens wird einerseits die erforderliche Dichtigkeit gewährleistet. Die mechanischen Anforderungen im Crashfall andererseits werden durch Anordnen von einem oder mehreren Längsverstärkungselementen und/oder einem oder mehreren Querverstärkungselementen in einem Raum, mit einem zweiten Boden, welcher beabstandet unterhalb des ersten Bodens angeordnet ist, welcher zwischen dem ersten und dem zweiten Boden definiert ist, gerecht. Der Raum zwischen dem ersten und dem zweiten Boden wird optimal genutzt, um die Crashperformance des Batteriegehäuses weiter zu verbessern. Crashverstärkungen zwischen dem ersten und dem zweiten Boden des Batteriegehäuses bieten den Vorteil, dass sie Crashlasten von den Seiten, von vorne/ hinten und auch von unten abstützen. Ferner können Crashverstärkungen zwischen dem ersten und dem zweiten Boden des Batteriegehäuses Verstärkungen im Inneren des Batteriegehäuses teilweise ersetzen. Dadurch wird der Bauraum für Batterien erhöht und vor allem können größere Batterieelemente eingesetzt werden.

Unter einem Batterieelement wird dabei insbesondere ein (wiederaufladbarer) Speicher für elektrische Energie auf elektrochemischer Basis verstanden. Dabei kann ein Batterieelement beispielsweise eine oder mehrere (zusammengeschaltete) Primärzellen oder eine oder mehrere (zusammengeschaltete) Sekundärzellen umfassen. Unter einem Batterieelement wird also insbesondere auch ein Akkupack oder eine Akkumulatorzelle verstanden.

Unter Raum ist ein geschlossenes Volumen zwischen dem ersten und dem zweiten Boden innerhalb des Batteriegehäuses zu verstehen.

Das Längsverstärkungselement und/oder das Querverstärkungselement ist insbesondere ein Profil aus einem Metallblech, vorzugsweise aus einem Stahlblech. Vorzugsweise werden hochfeste, kaltumformbare und/oder warmumformbare Stahlwerkstoffe eingesetzt. Der Querschnitt der Verstärkungselemente kann individuell und optimal an die gestellten Anforderungen angepasst sein. Bevorzugt sind die Profile als Hutprofil, C-Profil oder Rechteckprofil ausgeführt. Die Querschnittsform ist jedoch nicht auf die genannten Ausführungen beschränkt. Liegen Längs- und Querverstärkungen vor, können diese an ihren Kreuzungspunkten/Kreuzungsstellen miteinander bzw. zusammen, vorzugsweise stoffschlüssig verbunden sein. Alternativ können spezielle Verbindungsbauteile verwendet werden, welche beispielsweise über Flansche verfügen und an den Längs- und/oder Querverstärkungen befestigt werden können.

Gemäß einer Ausgestaltung weist das Batteriegehäuse in seinem Innenbereich ein oder mehrere Längsversteifungselemente und/oder ein oder mehrere Querversteifungselemente auf, wobei das eine oder die mehreren Längsversteifungselemente und/oder das eine oder die mehreren Querversteifungselemente Fächer für die Batterieelemente bilden. Da ein oder mehrere Batterieelemente vorgesehen sind, entspricht die Zahl der aus den Längsversteifungselementen und/oder Querversteifungselementen gebildeten Fächer der Anzahl der vorzusehenden Batterieelemente bzw. zu integrierender Elektronikkomponenten. Dadurch kann eine höhere Stabilität für alle Batterieelemente erreicht werden. Die Längsversteifungselemente und/oder Querversteifungselemente verstärken zudem die Struktur des Batteriegehäuses, insbesondere für alle Crashlastfälle. Versteifungselemente (längs und/oder quer) können alternativ oder kumulativ zwischen dem ersten und dem zweiten Boden angeordnet sein.

Gemäß einer Ausgestaltung sind das eine oder mehrere Längsverstärkungselemente in Längsrichtung (in Bezug auf die Einbauposition des Batteriegehäuses in Fahrtrichtung) jeweils durchgehend oder mehrteilig ausgebildet und/oder das eine oder mehrere Querverstärkungselemente in Querrichtung (in Bezug auf die Einbauposition des Batteriegehäuses quer zur Fahrtrichtung) jeweils durchgehend oder mehrteilig ausgebildet und/oder das eine oder mehrere Längsversteifungselemente in Längsrichtung jeweils durchgehend oder mehrteilig ausgebildet und/oder das eine oder mehrere Querversteifungselemente in Querrichtung jeweils durchgehend oder mehrteilig ausgebildet.

Der bereitgestellte Raum zwischen dem ersten und dem zweiten Boden definiert einen Abstand respektive eine Höhe zwischen den beiden Böden. Gemäß einer Ausgestaltung wird nur ein Teil der Höhe, beispielsweise die Hälfte der Höhe für die Längsverstärkungselemente und die andere Hälfte der Höhe für die Querverstärkungselemente beansprucht, und dadurch können sowohl die Längs- als auch Querverstärkungselemente im Wesentlichen durchgehend ausgeführt sein. Die Verstärkungselemente in Längs- wie in Querrichtung sind auf unterschiedlichen Ebenen innerhalb des Raumes angeordnet. Die durchgehende Ausführung auf unterschiedlichen Ebenen ist ein guter Kompromiss hinsichtlich optimaler Crashauslegung bei frontaler, rückwärtiger und seitlicher Lasteinwirkung.

In einer weiteren Ausgestaltung nutzen die Längsverstärkungselemente und Querverstärkungselemente insbesondere die vollständige Höhe des Raumes zwischen dem ersten und dem zweiten Boden. Es werden die Verstärkungselemente durchgehend ausgelegt, die der kritischen Crashanforderung (frontal/rückwärtig oder seitlich) gerecht werden müssen. Heißt, ist der Crashlastfall in Längsrichtung kritisch, werden die Längsverstärkungselemente durchgehend ausgelegt und die Querverstärkungselemente mehrteilig in Querrichtung vorgesehen bzw. ist der Crashlastfall in Querrichtung kritisch, werden die Querverstärkungselemente durchgehend ausgelegt und die Längsverstärkungselemente mehrteilig in Längsrichtung vorgesehen. Denkbar ist auch sowohl die Längs- als auch die Querverstärkungselemente mehrteilig auszuführen.

Gemäß einer Ausgestaltung können die Längsverstärkungselemente und/oder Querverstärkungselemente zumindest bereichsweise zusätzlich, insbesondere mit Kunststoff verstärkt sein. Die Verstärkung soll ein Ein- und/oder Wegknicken der Längsverstärkungs- und/oder Querverstärkungselemente im Lastfall verhindern. Alternativ oder kumulativ können die Längsverstärkungs- und Querverstärkungselemente in ihren Kreuzungspunkten und/oder Kreuzungsstellen mit Kunststoff verstärkt sein, insbesondere durch Umspritzen des Kreuzungspunktes und/oder der Kreuzungsstelle mit Kunststoff, um die Verbindung zwischen Längs- und Querverstärkungselement zumindest lokal zu verbessern.

Positiven Einfluss kann auf das Gewicht des Batteriegehäuses haben, wenn gemäß einer Ausgestaltung die Längsverstärkungselemente in Längsrichtung eine unterschiedliche Materialdicke aufweisen und/oder Querverstärkungselemente in Querrichtung eine unterschiedliche Materialdicke aufweisen. Die Verstärkungselemente können, wenn sie durchgehend (einstückig) vorgesehen sind, als Tailored Product (Tailored Blank, Tailored Strip, Tailored Rolled Blank etc.) ausgebildet sein, wobei die Materialdicke des Verstärkungselementes im Randbereich des Kastens dicker gewählt wird als im Mittenbereich. Sind die Verstärkungselemente mehrteilig in Längsrichtung und/oder Querrichtung ausgeführt, werden die Verstärkungselemente im Randbereich des Kastens mit einer größeren Materialdicke als die Verstärkungselemente in der fluchtenden Anordnung im Mittenbereich des Kastens angeordnet. Dadurch werden die Verstärkungselemente beanspruchungsgerecht und/oder gewichtsoptimiert ausgelegt bzw. angeordnet.

Eine weitere Optimierungsmöglichkeit besteht darin, wenn gemäß einer Ausgestaltung die Längsverstärkungselemente in Längsrichtung eine veränderliche Höhe und/oder Breite aufweisen und/oder die Querverstärkungselemente in Querrichtung eine veränderliche Höhe und/oder Breite aufweisen, insbesondere wenn sie im Randbereich des Kastens höher und/oder breiter als im Mittenbereich des Kastens ausgeführt sind.

Gemäß einer Ausgestaltung können die Längsverstärkungselemente im Raum unterhalb der Längsversteifungselemente angeordnet sein und/oder Querverstärkungselemente im Raum unterhalb der Querversteifungselemente angeordnet sein.

Gemäß einer weiteren Ausgestaltung können ein bis drei Längsverstärkungselemente im Raum unter und zwischen den Längsversteifungselementen angeordnet sein und/oder ein bis drei Querverstärkungselemente im Raum unter und zwischen den Querversteifungselementen angeordnet sein.

Gemäß einer Ausgestaltung liegen zwischen dem ersten Boden und den darunter angeordneten Längsverstärkungselemente und/oder Querverstärkungselemente ein Abstand und/oder Aussparungen zur Unterbringung einer Kühlung vor.

Um die Crashsicherheit zu erhöhen, kann gemäß einer Ausgestaltung des Batteriegehäuses im Innenbereich des Kastens insbesondere umlaufend entlang der den Rahmen bildenden Profile eine wellen- oder mäanderförmige Verstärkung angeordnet sein. Die Verstärkung ist dabei vorzugsweise aus Metall, insbesondere aus Stahl, beispielsweise aus einem höchstfesten Stahl, insbesondere aus einem Mangan-Bor-Stahl ausgebildet. Zur Anbindung des Batteriegehäuses an die Karosserie eines Fahrzeuges ist gemäß einer Ausgestaltung ein um den Kasten umlaufendes Anbindungsprofil angeordnet. Das Anbindungsprofil kann je nach Anforderung ein oder mehrteilig ausgebildet sein, wobei insbesondere in äquidistanten Abständen Öffnungen zur Aufnahme von Verbindungsmitteln, insbesondere von Bolzen oder Schrauben vorgesehen sind. Das Anbindungsprofil ist im Crashfall das erste Teil bzw. der erste Bereich des Batteriegehäuses, welches bzw. welcher einer Last ausgesetzt und dementsprechend belastungsgerecht ausgelegt sein sollte, welches über den Querschnitt des Profils und dessen Materialdicke einstellbar ist. Vorzugsweise ist das Anbindungsprofil zweiteilig, bestehend aus zwei offenen Profilen jeweils aus einem Metallblech, vorzugsweise aus Stahlblech ausgeführt, welche miteinander verbunden sind. Das zweiteilige Anbindungsprofil ist vorzugsweise stoffschlüssig mit dem Kasten verbunden und weist im verbundenen Zustand einen mehrkammerprofilähnlichen Querschnitt auf.

Gemäß einer Ausgestaltung sind im Randbereich des Kastens zumindest bereichsweise zusätzliche Verstärkungen angeordnet. Diese können den Widerstand im Randbereich des Kastens respektive des Batteriegehäuses erhöhen, wodurch ein seitliches Ein-/Aus- bzw. Wegknicken im Crashfall im Wesentlichen verhindert werden kann.

Erfindungsgemäß überragen die Längsverstärkungselemente und/oder Querverstärkungselemente die Abmessung des Kastens, mit anderen Worten stehen die Verstärkungselemente mit ihren Enden über. Insbesondere kann das überstehende Ende des Verstärkungselements weit innerhalb des mit dem Kasten verbundenen Anbindungsprofil hineinragen und mit diesem verbunden sein, wodurch im Crashfall ein frühzeitigen Einleiten der Crashlast in die Längsverstärkungselemente und/oder Querverstärkungselemente und dadurch eine zu starke Deformation des Innenbereichs respektive der Fächer in welchem respektive in welchen die Batterieelemente positioniert bzw. Elektronikkomponenten integriert sind im Wesentlichen verhindert werden kann.

Im Folgenden wird die Erfindung anhand einer Ausführungsbeispiele darstellenden Zeichnung näher erläutert. Gleiche Teile sind mit gleichen Bezugszeichen versehen. Es zeigt:
- Figur 1): ein Ausführungsbeispiel eines Batteriegehäuses in perspektivischer Darstellung ohne Deckel,
- Figur 2): ein Ausführungsbeispiel eines Batteriegehäuses in einem schematischen Teilschnitt a) und in einer schematischen Untersicht ohne zweiten Boden und ohne Anbindungsprofil b),
- Figur 3): ein Ausführungsbeispiel eines Batteriegehäuses in einem schematischen Teilschnitt a) und in einer schematischen Untersicht ohne zweiten Boden und ohne Anbindungsprofil b),
- Figur 4): ein Ausführungsbeispiel eines Batteriegehäuses in einem schematischen Teilschnitt a) und in einer schematischen Untersicht ohne zweiten Boden und ohne Anbindungsprofil b),
- Figur 5): ein Ausführungsbeispiel eines Batteriegehäuses in einem schematischen Teilschnitt a) und in einer schematischen Untersicht ohne zweiten Boden und ohne Anbindungsprofil b),
- Figur 6): ein Ausführungsbeispiel eines Batteriegehäuses in einer schematischen Teiluntersicht ohne zweiten Boden und ohne Anbindungsprofil und
- Figur 7): Ausführungsbeispiele a) bis c) eines Batteriegehäuses in einem schematischen Teilschnitt.

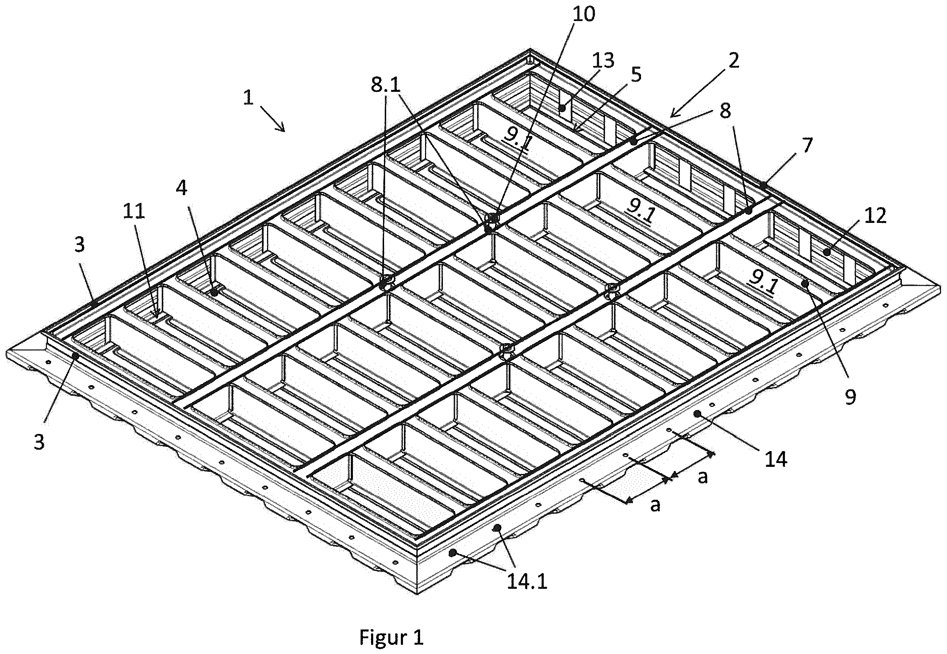

In Fig. 1 ist ein Ausführungsbeispiel eines Batteriegehäuses 1 in einer perspektivischen Darstellung gezeigt. Das Batteriegehäuse 1 dient der Aufnahme von Batterieelementen (nicht dargestellt) und kann insbesondere für ein Fahrzeug verwendet werden und im Bereich des Fahrzeugbodens angeordnet werden. Das Batteriegehäuse 1 umfasst einen Kasten 2, welcher aus einem oder aus mehreren Profilen 3 zusammengesetzter Rahmen 7 und zumindest einem ersten Boden 4 gebildet ist, welcher einen Innenbereich 5 für die Batterieelemente bereitstellt. Der Deckel 6 zum insbesondere dichten Abdecken des Kastens 2 respektive des Innenbereiches 5 ist der Übersichtlichkeit halber nicht in Fig. 1 dargestellt. Die Profile 3 zur Bildung des Rahmens 7 sind vorzugsweise aus Stahlblech gebildet und können strukturiert sein. Der erste Boden 4 ist beispielsweise aus Stahlblech gebildet. Das Batteriegehäuse 1 weist in seinem Innenbereich 5 in dieser Ausführung zwei Längsversteifungselemente 8 und acht Querversteifungselemente 9 auf.

Die zwei Längsversteifungselemente 8 sind in Längsrichtung durchgehend ausgebildet. Die Querversteifungselemente 9 sind unterbrochen ausgebildet, umfassen mehrere Querversteifungselemente welche jeweils aus drei Einzelelementen 9.1 zusammengesetzt sind. Längsversteifungselemente 8 weisen jeweils zwei Öffnungen 8.1 zum Hindurchführen von Montagebuchsen 10 auf. Durch die Längsversteifungselemente 8 und die Querversteifungselemente 9 werden Fächer 11 für die Batterieelemente gebildet, so dass in dieser Ausführung insgesamt 27 Batterieelemente aufgenommen werden können.

Der Batteriekasten 1 enthält mindestens ein Längsversteifungselement 8 und mehrere Querversteifungselemente 9, welche zusammen eine Fachstruktur für die einzelnen Batterieelemente bilden. Die Längsversteifungselemente 8 sind in Fig. 1 durchgehend ausgeführt, die Querversteifungselemente 9 sind an den Kreuzungspunkten in Einzelelemente 9.1 segmentiert. Nicht dargestellt ist alternativ eine Ausführung, bei der die Querversteifungselemente 9 durchgehend sein können, und die Längsversteifungselemente 8 an den Kreuzungspunkten in Einzelelemente segmentiert sind.

Im Innenbereich 5 des Kastens 2 ist insbesondere umlaufend entlang der den Rahmen 7 bildenden Profile 3 eine wellen- oder mäanderförmige Verstärkung 12 angeordnet. Die wellen- oder mäanderförmige Verstärkung 12 kann bereichsweise durch mehrere innenliegende Verstärkungsstreifen 13 verstärkt sein, um ein Auseinanderklaffen der Verstärkung 12 im Crashfall zu verhindern.
Zur Anbindung des Batteriegehäuses an die Karosserie eines Fahrzeuges ist ein um den Kasten 2 umlaufendes Anbindungsprofil 14 angeordnet, wobei insbesondere in äquidistanten Abständen a Öffnungen 14.1 zur Aufnahme von nicht dargestellten Verbindungsmitteln, insbesondere von Bolzen oder Schrauben vorgesehen sind. Das Anbindungsprofil 14 ist ein- oder mehrteilig jeweils vorzugsweise aus Stahlblech ausgeführt und vorzugsweise stoffschlüssig mit dem Kasten 2 verbunden.

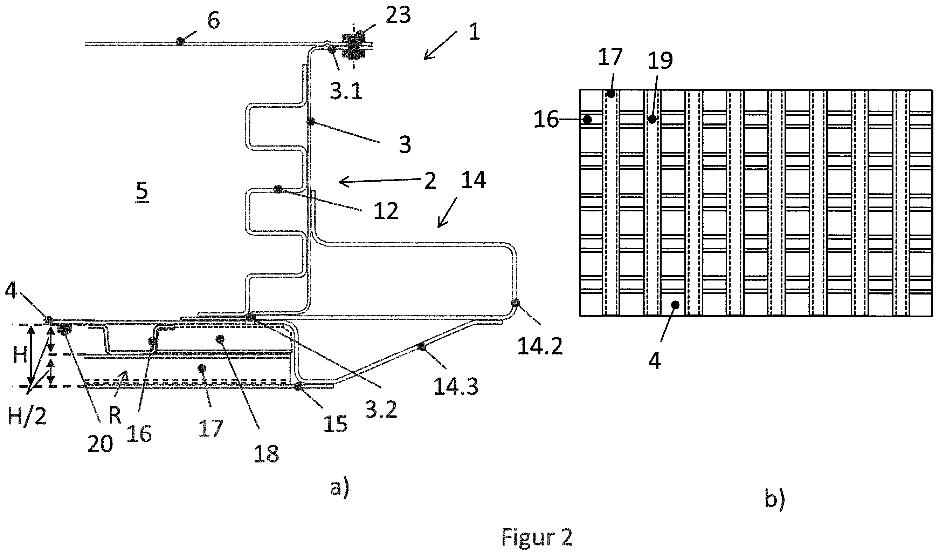

Der Figur 2a) ist ein Ausführungsbeispiel eines Batteriegehäuses 1 in einem schematischen Teilschnitt zu entnehmen. Die Darstellung zeigt den rechten Teil des Batteriegehäuses 1 bezogen auf die Fahrtrichtung oder den linken Teil entgegen der Fahrtrichtung. Das Batteriegehäuse 1 umfasst fernen einen zweiten Boden 15, welcher beabstandet unterhalb des ersten Bodens 4 angeordnet ist und einen Raum R zwischen sich und dem ersten Boden 4 definiert. Im Raum R sind ein oder mehrere Längsverstärkungselemente 16 und/oder ein oder mehrere Querverstärkungselemente 17 angeordnet. Die Längsverstärkungselemente 16 (in Fahrzeuglängsrichtung) und Querverstärkungselemente 17 (in Fahrzeugquerrichtung) weisen beispielsweise jeweils einen hutförmigen Querschnitt auf und sind jeweils vorzugsweise aus einem Stahlblech gebildet. Der bereitgestellte Raum R zwischen dem ersten Boden 4 und dem zweiten Boden 15 definiert einen Abstand respektive eine Höhe H zwischen den beiden Böden 4, 15. Die Längsverstärkungselemente 16 beanspruchen aufgrund ihrer Ausgestaltung nur einen Teil der Höhe H des Raumes R, beispielsweise die Hälfte H/2 der Höhe H und die andere Hälfte H/2 der Höhe H wird durch die Querverstärkungselemente 17 beansprucht. So können sowohl die Längsverstärkungselemente 16 als auch Querverstärkungselemente 17 im Wesentlichen durchgehend auf unterschiedlichen Ebenen innerhalb des Raumes R ausgeführt sein (Fig. 2b)) und sind an ihren Kreuzungspunkten 19 vorzugsweise stoffschlüssig miteinander verbunden, um eine optimale Crashauslegung des Batteriegehäuses 1 zu gewährleisten. Vor dem Zusammenbau, sprich bevor der zweite Boden 15 an das Batteriegehäuse 1 befestigt, vorzugsweise lösbar befestigt wird, können die Längsverstärkungselemente 16 mit dem Boden 4 vorzugsweise stoffschlüssig verbunden sein und die Querverstärkungselemente 17 mit dem Boden 15 vorzugsweise stoffschlüssig verbunden sein. Im Randbereich des Kastens 2 kann zumindest bereichsweise eine zusätzliche Verstärkung 18 (strichliniert dargestellt) angeordnet sein, welche vorzugsweise oberhalb des Querverstärkungselementes 17 angeordnet und mit diesem zumindest bereichsweise vorzugsweise stoffschlüssig verbunden ist, um bei einem seitlichen Crash ein Einknicken im Übergang vom Rahmen 7 zum zweiten Boden 15 zu verhindern. Das Anbindungsprofil 14 ist belastungsgerecht ausgelegt und ist zweiteilig aus zwei offenen Profilen 14.2, 14.3 jeweils vorzugsweise aus Stahlblech ausgeführt, welche miteinander verbunden sind. Durch die vorzugsweise stoffschlüssige Verbindung mit dem Kasten 2 weist das Anbindungsprofil 14 einen mehrkammerprofilähnlichen Querschnitt auf. Der Querschnitt des unteren Profils 14.3 entspricht im Wesentlichen einem rechtwinkligen Trapez mit abstehenden Flanschen zur vorzugsweise stoffschlüssigen Verbindung an das obere Profil 14.2, und wirkt bei einem Crashfall aufgrund seiner Geometrie mit einem hohen Widerstand der eintreffenden Kraft entgegen und verhindert insbesondere ein Wegknicken nach unten. Der zweite Boden 15 ist größer dimensioniert als der erste Boden 4, wobei der Randbereich des zweiten Bodens 15 mit einem vorzugsweise planen Bereich des unteren Profils 14.3 insbesondere dichtend in Anlage gelangt, so dass der Raum R insbesondere gegen Spritzwasser abgedichtet ist. Das Profil 3 des Rahmens 7 weist einen im Wesentlichen Z-förmigen Querschnitt auf, wobei der obere Schenkel 3.1 gerade ausgebildet ist, um eine plane und dichtende Anbindungsfläche mit dem Deckel 6 bereitzustellen. Der Deckel 6 ist beispielsweise mechanisch und lösbar an dem Rahmen 7 befestigt, insbesondere über eine Verschraubung 23. Der untere Schenkel 3.2 weist zwei plane und dichtende Anbindungsbereiche für den ersten Boden 4 und mit einem Absatz versehen für das Anbindungsprofil 14, welches über einer Materialdoppelung der Randabschnitte der Profile 14.2 und 14.3 mit dem unteren Randbereich des Kastens 2 verbunden wird, auf.

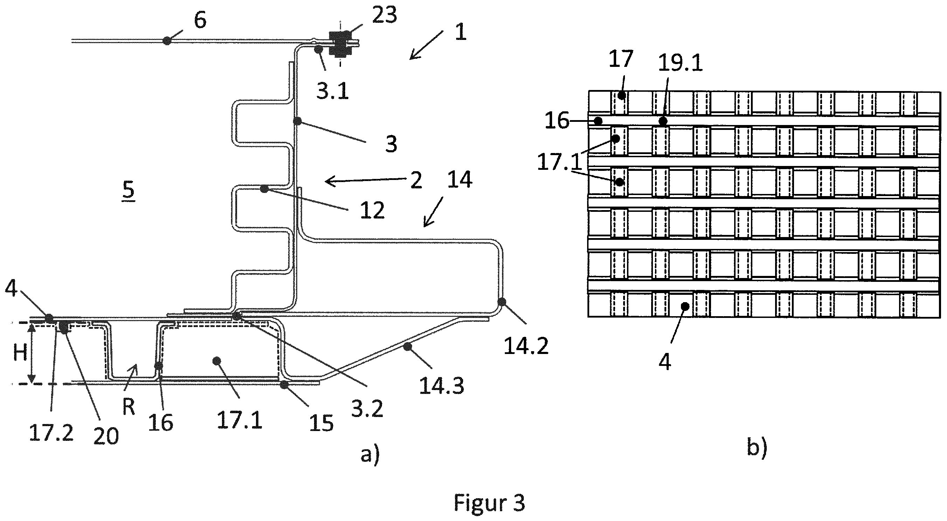

Der Unterschied zwischen dem Ausführungsbeispiel in Fig. 3a) und dem Ausführungsbeispiel in Fig. 2a) liegt in der Anordnung der Längsverstärkungselemente 16 und der Querverstärkungselemente 17, welche sich die vollständige Höhe H des Raumes R zwischen dem ersten Boden 4 und dem zweiten Boden 15 teilen. Die Längsverstärkungselemente 16 und die Querverstärkungselemente 17 sind somit in ein und derselben Ebene angeordnet. In dieser Ausführung sind die Längsverstärkungselemente 16 durchgehend ausgelegt und die Querverstärkungselemente 17 sind mehrteilig und unterbrochen zwischen den Längsverstärkungselementen 16 in Querrichtung als Einzelelemente 17.1 angeordnet (Fig. 3b)). Die Längsverstärkungselemente 16 und die Querverstärkungselemente 17 sind vorzugsweise mit dem ersten Boden 4 stoffschlüssig verbunden, insbesondere sind sie auch an ihren Kreuzungsstellen 19.1 untereinander stoffschlüssig verbunden. Der zweite Boden 15 kann im Zusammenbau an das Batteriegehäuse 1 befestigt, vorzugsweise lösbar befestigt werden. Eine Kühlung oder eine in Längsrichtung mit einer Kühlung verbundenen medienführenden Leitung 20 kann unter dem ersten Boden 4 innerhalb des Raumes R vorgesehen und mit diesem beispielsweise stoffschlüssig verbunden sein. Um die Kühlmittelleitung 20 im Wesentlichen durchgehend von vorn nach hinten vorzusehen, sind vor der Verbindung der Querversteifungselemente 17 respektive in einzelne Einzelelemente 17.1 entsprechende Aussparung 17.2 einzubringen. Eine Kühlung (bzw. Kühlelemente) kann auch bei den anderen Ausführungsbeispielen vorgesehen sein. An den Kreuzungsstellen 19.1 können beispielsweise zusätzliche Anbindungspunkte (nicht dargestellt) zum zusätzlichen Anbinden/Befestigen des zweiten Bodens 15 vorgesehen sein, insbesondere in Form von Schweißmuttern.

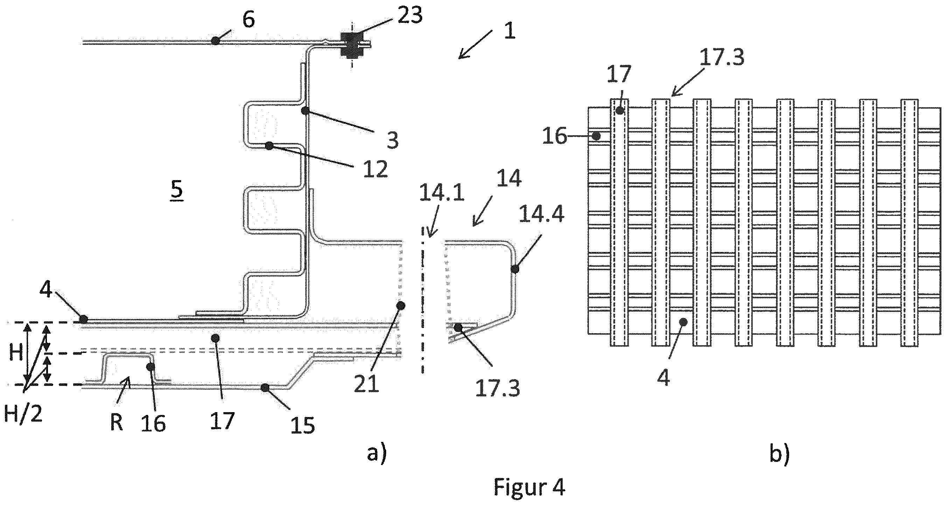

Das Ausführungsbeispiel in Fig. 4a) unterscheidet sich vom Ausführungsbeispiel in Fig. 2a) in der Anordnung der Längsverstärkungselemente 16 und Querverstärkungselemente 17, welche zwar durchgehend auf unterschiedlichen Ebenen innerhalb des Raumes R verlaufen, jedoch in der oberen Ebene (H/2) die Querverstärkungselemente 17 verlaufen und die Abmessung des Kastens 2 überragen (Fig. 4b)). Der überstehende Bereich bzw. das überstehende Ende 17.3 des Querverstärkungselementes 17 ragt in das Anbindungsprofil 14 hinein und wird mit dem Anbindungsprofil 14 vorzugsweise stoffschlüssig verbunden, so dass eine gewisse Stabilität des Batteriegehäuses 1 gewährleistet werden kann und es ausreicht, das Anbindungsprofil 14 nur als einteiliges Profil 14.4 auszuführen. Dafür wird vorzugsweise ein Teil des überstehenden Endes 17.3 schräg beschnitten, um das Ende des Querverstärkungselementes an den Verlauf des Teilquerschnittes des Anbindungsprofils 14 anzupassen und um eine größere Anbindungsfläche bereitzustellen. Der untere Randbereich des Profils 14.4 ist insbesondere umlaufend dicht mit dem Randbereich des zweiten Bodens 15 verbunden bzw. steht mit diesem in Kontakt. Um eine ausreichende Dichtigkeit insbesondere des Raumes R sicherzustellen, ist in der durchgehenden Öffnung 14.1 innerhalb des Anbindungsprofils 14 ein Spritzwasserschutz in Form einer eingeführten Hülse 21 (strichliniert dargestellt) angeordnet, welche am unteren und oberen Teil des Anbindungsprofils 14 dicht umlaufend am Rand der Öffnung 14.1 angebunden ist.

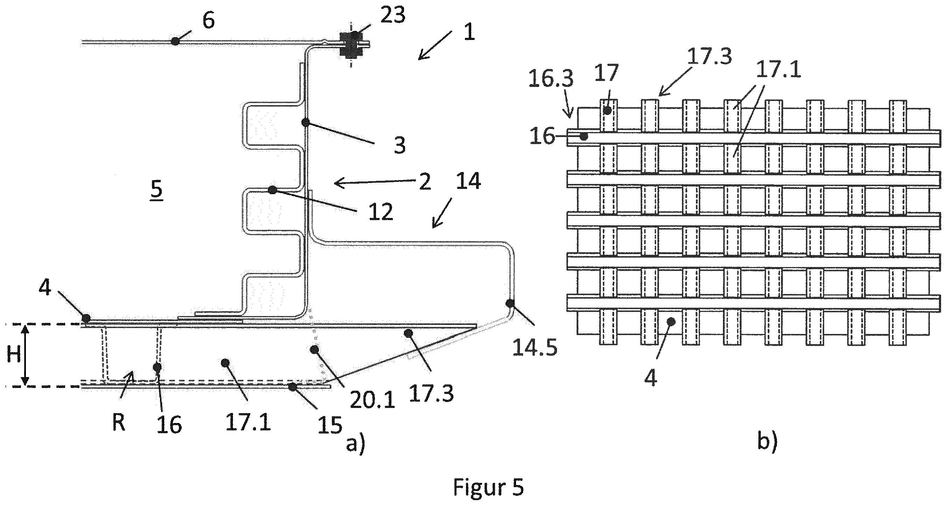

Der Unterschied zwischen dem Ausführungsbeispiel in Fig. 5a) und dem Ausführungsbeispiel in Fig. 4a) liegt in der Anordnung der Längsverstärkungselemente 16 und der Querverstärkungselemente 17, wobei beide Verstärkungselemente 16, 17 die vollständige Höhe H des Raumes R beanspruchen. Zudem überragen neben den Querverstärkungselementen 17 auch die Längsverstärkungselemente 16 die Abmessung des Kastens 2 mit ihren überstehenden Enden 16.3 (Fig. 5b)), so dass auch frontal und rückwärtig eine frühzeitige Einleitung der Crashlast erfolgen kann. Auch in dieser Ausführung (vgl. Fig. 3a)) sind die Längsverstärkungselemente 16 durchgehend ausgeführt und die Querverstärkungselemente 17 sind mehrteilig und unterbrochen zwischen den Längsverstärkungselementen 16 in Querrichtung als Einzelelemente 17.1 angeordnet. Die Längsverstärkungselemente 16 und die Querverstärkungselemente 17 sind vorzugsweise mit dem ersten Boden 4 stoffschlüssig verbunden, insbesondere sind sie auch an ihren Kreuzungsstellen 19.1 untereinander stoffschlüssig verbunden. Das Anbindungsprofil 14 ist als einteiliges Profil 14.5 ausgeführt, welches an dem einen Randbereich mit dem Rahmen 7 des Kastens 2 und an dem anderen Randbereich abschnittsweise mit den schräg beschnittenen Anbindungsflächen der Verstärkungselemente 16,17 verbunden ist. Um den Raum R vor Spritzwasser zu schützen, ist umlaufend ein Schließblech respektive ein Spritzwasserschutz 21.1, welches bzw. welcher aus Metall oder Kunststoff-Spritzgussteil ausgeführt sein kann, angeordnet, welches dicht mit dem unteren Teil des Kastens 2, mit dem Randbereich des zweiten Bodens 15 und mit den Verstärkungselementen 16, 17 verbunden ist.

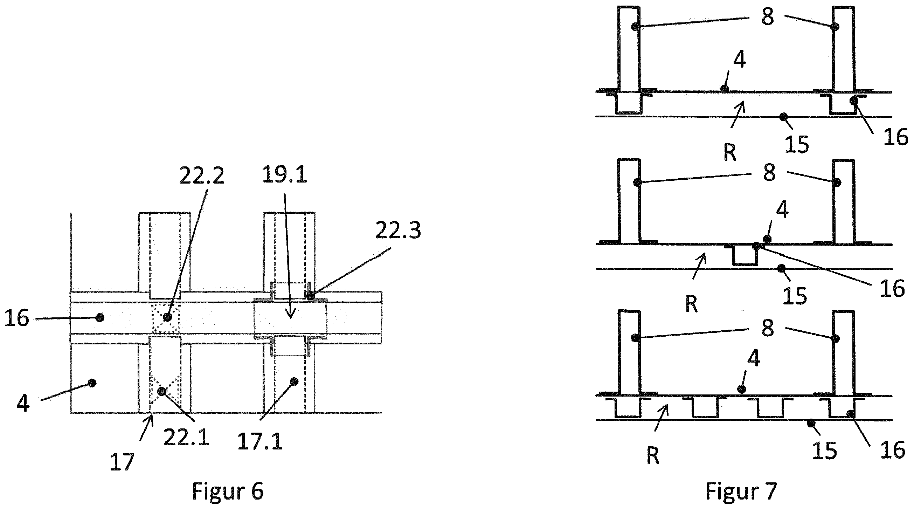

In Fig. 6) sind unterschiedliche Ausführungen zur Verstärkung der Verstärkungselemente 16, 17 dargestellt. Das Querverstärkungselement 17 kann abschnittsweise, bei Bedarf auch vollständig, entlang seiner Längsausrichtung mit Kunststoff in Form einer Verrippung 22.1 verstärkt werden. Alternativ oder kumulativ können auch die Längsverstärkungselemente 16 beispielsweise im Bereich des Kreuzungspunktes Kunststoffverrippung 22.2 verstärkt sein. Auch der Bereich der Kreuzungsstelle 19.1 kann die Verbindung zwischen den Verstärkungselementen 16, 17 zusätzlich durch Umspritzen von Kunststoff 22.3 verstärken.

In den Figuren 7a) bis 7c) sind unterschiedliche Ausführungen gezeigt, wie die, hier am Beispiel von schematischen Teilschnitten quer zur Fahrtrichtung dargestellt, Längsverstärkungselemente 16 im Raum R zwischen dem ersten Boden 4 und dem zweiten Boden 15 angeordnet werden können. Bei Crashbelastungen von unten kann es vorteilhaft sein, wenn beispielsweise die Längsverstärkungselemente 16 jeweils unterhalb der Längsversteifungselemente 8 (Fig. 7a)) angeordnet sind. Abhängig von der Größe des Batterieelementes kann der Abstand zwischen den Längsversteifungselementen 8 zu hoch ausgelegt sein, so dass bei einem Crash von der Seite der Bereich zwischen den Längsversteifungselementen 8 nicht ausreichend abgestützt sein kann. Um ein Kollabieren zu verhindern, ist beispielsweise das Längsverstärkungselement 16 im Raum R zwischen den Längsversteifungselementen angeordnet (Fig. 7b)). Bei hohen Crashanforderungen können beispielsweise mehrere Längsverstärkungselemente 16 im Raum R angeordnet werden (Fig. 7c)), insbesondere können ein bis drei Längsverstärkungselemente 16 im Raum R unterhalb und zwischen den Längsversteifungselementen (8) angeordnet sein.

Die Erfindung ist nicht auf die gezeigten Ausführungen beschränkt, sondern es können Verstärkungselemente in beliebiger (Querschnitts-) Form verwendet werden, beispielsweise auch Tailored Products. Beispielsweise können die in der Kastenmitte angeordneten Verstärkungselemente eine geringere Materialdicke als die am Kastenrand aufweisen, insbesondere wenn sie mehrteilig ausgeführt sind. Die Verwendung des Batteriegehäuses ist besonders bevorzugt in Personenkraftwagen, Nutzfahrzeugen, Lastkraftwagen, Sonderfahrzeugen, Busse, Omnibusse, ob mit Hybrid- oder reinem elektrischen Antrieb, aber auch in gleisgebundenen Fahrzeugen, wie beispielsweise Straßenbahnen oder personenbefördernden Waggons.

### Bezugszeichenliste

- 1: Batteriegehäuse
- 2: Kasten
- 3: Profil
- 3.1, 3.2: Schenkel des Profils
- 4: erster Boden
- 5: Innenbereich
- 6: Deckel
- 7: Rahmen
- 8: Längsversteifungselement
- 8.1: Öffnung in Längsversteifungselement
- 9: Querversteifungselement
- 10: Montagebuchse
- 11: Fach
- 12: Verstärkung
- 13: Verstärkungsstreifen
- 14: Anbindungsprofil
- 14.1: Öffnungen
- 14.2-14.5: Profile des Anbindungsprofils
- 15: zweiter Boden, Unterfahrschutz
- 16: Längsverstärkungselement
- 16.3: überstehendes Ende des Längsverstärkungselementes
- 17: Querverstärkungselement
- 17.1: Einzelelement der Querverstärkung
- 17.2: Ausnehmung
- 17.3: überstehendes Ende des Querverstärkungselementes
- 18: Zusatzverstärkung
- 19: Kreuzungspunkt
- 19.1: Kreuzungsstelle
- 20: Kühlung, Kühlmittelleitung
- 21: Hülse, Spritzwasserschutz
- 21.1: Schließblech, Spritzwasserschutz
- 22.1-22.3: Kunststoffverstärkung, Verrippung
- 23: Verschraubung
- a: Abstand
- H: Höhe
- R: Raum

## Patentansprüche

1. Batteriegehäuse (1) zur Aufnahme von Batterieelementen für ein Fahrzeug, umfassend
- einen Kasten (2), welcher aus einem oder aus mehreren Profilen (3) zusammengesetzter Rahmen (7) und zumindest einem ersten Boden (4) gebildet ist, welcher einen Innenbereich (5) für die Batterieelemente bereitstellt,
- einen zweiten Boden (15), welcher beabstandet von dem ersten Boden (4) angeordnet ist und einen Raum (R) zwischen sich und dem ersten Boden (4) definiert, wobei der zweite Boden (15) auf der dem Deckel (6) gegenüberliegenden Seite des Batteriegehäuses (1) angeordnet ist, wobei der erste Boden (4) zwischen dem Deckel (6) und dem zweiten Boden (15) angeordnet ist,
- einen Deckel (6) zum Abdecken des Kastens,
**dadurch gekennzeichnet, dass**
im Raum (R) ein oder mehrere Längsverstärkungselemente (16) und/oder ein oder mehrere Querverstärkungselemente (17, 17.1) angeordnet sind, wobei die Längsverstärkungselemente (16, 16.3) und/oder Querverstärkungselemente (17, 17.1, 17.3) die Abmessung des Kastens überragen.

2. Batteriegehäuse nach Anspruch 1, **dadurch gekennzeichnet, dass** das Batteriegehäuse (1) in seinem Innenbereich (5) ein oder mehrere Längsversteifungselemente (8) und/oder ein oder mehrere Querversteifungselemente (9, 9.1) aufweist, wobei das eine oder die mehreren Längsversteifungselemente (8) und/oder das eine oder die mehreren Querversteifungselemente (9, 9.1) Fächer (11) für die Batterieelemente bilden.

3. Batteriegehäuse nach Anspruch 1 oder 2, **dadurch gekennzeichnet, dass** das eine oder mehrere Längsverstärkungselemente (16) in Längsrichtung jeweils durchgehend oder mehrteilig ausgebildet sind und/oder das eine oder mehrere Querverstärkungselemente (17, 17.1) in Querrichtung jeweils durchgehend oder mehrteilig ausgebildet sind und/oder das eine oder mehrere Längsversteifungselemente (8) in Längsrichtung jeweils durchgehend oder mehrteilig ausgebildet sind und/oder das eine oder mehrere Querversteifungselemente (9, 9.1) in Querrichtung jeweils durchgehend oder mehrteilig ausgebildet sind.

4. Batteriegehäuse nach einem der vorgenannten Ansprüche, **dadurch gekennzeichnet, dass** die Längsverstärkungselemente (16) und/oder Querverstärkungselemente (17, 17.1) zumindest bereichsweise zusätzlich mit Kunststoff (22.1, 22.2, 22.3) verstärkt sind.

5. Batteriegehäuse nach einem der vorgenannten Ansprüche, **dadurch gekennzeichnet, dass** die Längsverstärkungselemente (16) in Längsrichtung eine unterschiedliche Materialdicke aufweisen und/oder die Querverstärkungselemente (17, 17.1) in Querrichtung eine unterschiedliche Materialdicke aufweisen.

6. Batteriegehäuse nach einem der vorgenannten Ansprüche, **dadurch gekennzeichnet, dass** die Längsverstärkungselemente (16) in Längsrichtung eine veränderliche Höhe und/oder Breite aufweisen und/oder die Querverstärkungselemente (17, 17.1) in Querrichtung eine veränderliche Höhe und/oder Breite aufweisen.

7. Batteriegehäuse nach einem der vorgenannten Ansprüche, **dadurch gekennzeichnet, dass** im Innenbereich (5) des Kastens (2) umlaufend entlang der den Rahmen (7) bildenden Profile (3) eine wellen- oder mäanderförmige Verstärkung (12) angeordnet ist.

8. Batteriegehäuse nach einem der vorgenannten Ansprüche, **dadurch gekennzeichnet, dass** ein um den Kasten (2) umlaufendes Anbindungsprofil (14, 14.2, 14.3, 14.4, 14.5) angeordnet ist.

9. Batteriegehäuse nach einem der vorgenannten Ansprüche, **dadurch gekennzeichnet, dass** im Randbereich des Kastens (2) zumindest bereichsweise zusätzliche Verstärkungen (18) angeordnet sind.

## Claims

1. Battery housing (1) for receiving battery elements, in particular for a vehicle, comprising
- a case (2) formed by a frame (7) composed of one or more profiles (3), and at least one first floor (4) which provides an interior region (5) for the battery elements,
- a second floor (15) which is positioned at a distance from the first floor (4) and defines a space (R) between itself and the first floor (4), wherein the second floor (15) is arranged on the side of the battery housing (1) opposite the cover (6), wherein the first floor (4) is arranged between the cover (6) and the second floor (15),
- a cover (6) for covering the case,
**characterized in that**
one or more longitudinal reinforcing elements (16) and/or one or more transverse reinforcing elements (17, 17.1) are arranged in the space (R), wherein the longitudinal reinforcing elements (16, 16.3) and/or the transverse reinforcing elements (17, 17.1, 17.3) protrude beyond the dimensions of the case.

2. Battery housing according to Claim 1, **characterized in that** in its interior region (5), the battery housing (1) comprises one or more longitudinal stiffening elements (8) and/or one or more transverse stiffening elements (9, 9.1), wherein the one or more longitudinal stiffening elements (8) and/or the one or more transverse stiffening elements (9, 9.1) form compartments (11) for the battery elements.

3. Battery housing according to Claim 1 or 2, **characterized in that** the one or more longitudinal reinforcing elements (16) are each formed so as to be continuous or multipiece in the longitudinal direction, and/or the one or more transverse reinforcing elements (17, 17.1) are each formed so as to be continuous or multipiece in the transverse direction, and/or the one or more longitudinal stiffening elements (8) are each formed so as to be continuous or multipiece in the longitudinal direction, and/or the one or more transverse stiffening elements (9, 9.1) are each formed so as to be continuous or multipiece in the transverse direction.

4. Battery housing according to any of the preceding claims, **characterized in that** the longitudinal reinforcing elements (16) and/or the transverse reinforcing elements (17, 17.1) are additionally reinforced at least in regions with plastic (22.1, 22.2, 22.3).

5. Battery housing according to any of the preceding claims, **characterized in that** the longitudinal reinforcing elements (16) have a different material thickness in the longitudinal direction, and/or the transverse reinforcing elements (17, 17.1) have a different material thickness in the transverse direction.

6. Battery housing according to any of the preceding claims, **characterized in that** the longitudinal reinforcing elements (16) have a variable height and/or width in the longitudinal direction, and/or the transverse reinforcing elements (17, 17.1) have a variable height and/or width in the transverse direction.

7. Battery housing according to any of the preceding claims, **characterized in that** an undulating or meandering reinforcement (12) is arranged in the interior region (5) of the case (2) peripherally along the profiles (3) forming the frame (7).

8. Battery housing according to any of the preceding claims, **characterized in that** a connecting profile (14, 14.2, 14.3, 14.4, 14.5) is arranged surrounding the case (2).

9. Battery housing according to any of the preceding claims, **characterized in that** additional reinforcements (18) are arranged at least in regions of the edge region of the case (2).

## Revendications

1. Boîtier de batterie (1) destiné à recevoir des éléments de batterie destinés à un véhicule, ledit boîtier comprenant
- une boîte (2) qui est formée à partir d'un ou de plusieurs profilés (3) d'un cadre assemblé (7) et d'au moins un premier fond (4) qui forme une zone intérieure (5) destinée aux éléments de batterie,
- un deuxième fond (15) qui est disposé à distance du premier fond (4) et qui définit un espace (R) entre lui-même et le premier fond (4), le deuxième fond (15) étant disposé du côté du boîtier de batterie (1) qui est opposé au couvercle (6), le premier fond (4) étant disposé entre le couvercle (6) et le deuxième fond (15),
- un couvercle (6) destiné à recouvrir la boîte,
**caractérisé en ce que**
un ou plusieurs éléments de renforcement longitudinaux (16) et/ou un ou plusieurs éléments de renforcement transversaux (17, 17.1) sont disposés dans l'espace (R), les éléments de renforcement longitudinaux (16, 16.3) et/ou les éléments de renforcement transversaux (17, 17.1, 17.3) faisant saillie au-delà des dimensions de la boîte.

2. Boîtier de batterie selon la revendication 1, **caractérisé en ce que** le boîtier de batterie (1) comporte dans sa région intérieure (5) un ou plusieurs éléments de renforcement longitudinaux (8) et/ou un ou plusieurs éléments de renforcement transversaux (9, 9.1), le ou les éléments de renforcement longitudinaux (8) et/ou le ou les éléments de renforcement transversaux (9, 9.1) formant des compartiments (11) destinés aux éléments de batterie.

3. Boîtier de batterie selon la revendication 1 ou 2, **caractérisé en ce que** le ou les éléments de renforcement longitudinaux (16) sont chacun formés d'un seul tenant ou de plusieurs parties dans la direction longitudinale et/ou le ou les éléments de renforcement transversaux (17, 17.1) sont chacun formés d'un seul tenant ou de plusieurs parties dans la direction transversale et/ou le ou les éléments de renforcements longitudinaux (8) sont chacun formés d'un seul tenant ou de plusieurs parties dans la direction longitudinale et/ou le ou les éléments de renforcement transversaux (9, 9.1) sont chacun formés d'un seul tenant ou de plusieurs parties dans la direction transversale.

4. Boîtier de batterie selon l'une des revendications précédentes, **caractérisé en ce que** les éléments de renforcement longitudinaux (16) et/ou les éléments de renforcement transversaux (17, 17.1) sont en outre renforcés au moins dans certaines zones avec de la matière synthétique (22.1, 22.2, 22.3).

5. Boîtier de batterie selon l'une des revendications précédentes, **caractérisé en ce que** les éléments de renforcement longitudinaux (16) ont une épaisseur de matière différente dans la direction longitudinale et/ou les éléments de renforcement transversaux (17, 17.1) ont une épaisseur de matière différente dans la direction transversale.

6. Boîtier de batterie selon l'une des revendications précédentes, **caractérisé en ce que** les éléments de renforcement longitudinaux (16) ont une hauteur et/ou une largeur variable dans la direction longitudinale et/ou les éléments de renforcement transversaux (17, 17.1) ont une hauteur et/ou une largeur variables dans la direction transversale.

7. Boîtier de batterie selon l'une des revendications précédentes, **caractérisé en ce qu'**un renforcement en forme d'onde ou de méandre (12) est disposé dans la région intérieure (5) de la boîte (2) circonférentiellement le long des profilés (3) formant le cadre (7).

8. Boîtier de batterie selon l'une des revendications précédentes, **caractérisé en ce qu'**un profilé de liaison (14, 14.2, 14.3, 14.4, 14.5) est prévu qui s'étend autour de la boîte (2).

9. Boîtier de batterie selon l'une des revendications précédentes, **caractérisé en ce que** des renforcements supplémentaires (18) sont disposés au moins dans certaines zones de la zone de bord de la boîte (2).
